# EUROPÄISCHE PATENTSCHRIFT

(11) **EP 2 257 772 B1**
(45) Veröffentlichungstag und Bekanntmachung des Hinweises auf die Patenterteilung: **25.04.2012**
(21) Anmeldenummer: 09722487.7
(22) Anmeldetag: 31.01.2009
(51) Int. Cl.: G01F 1/28, G01P 13/00

(54) **STRÖMUNGSWÄCHTER**
FLOW MONITOR
CONTRÔLEUR D'ÉCOULEMENT

(30) Priorität: 20.03.2008 DE 102008015158
(43) Veröffentlichungstag der Anmeldung: 08.12.2010
(73) Patentinhaber: Maschinenfabrik Reinhausen GmbH, 93059 Regensburg (DE)
(72) Erfinder: BRILL, Reiner, 63667 Nidda (DE); HAEMEL, Kai, 63637 Jossgrund (DE); REHNELT, Ulrich, 65520 Bad Camberg (DE); VIERECK, Karsten, 93059 Regensburg (DE)
(86) Internationale Anmeldenummer: PCT/EP2009/000649
(87) Internationale Veröffentlichungsnummer: WO 2009/115162

(56) Entgegenhaltungen:
- DE-A1- 2 245 882
- DE-A1- 3 814 455
- DE-A1-102004 013 024
- DE-B- 1 156 994
- US-A- 2 564 676
- US-A- 2 917 922
- US-B1- 6 239 446
- LEENDERS P C: "MAGNETISCHE TANDWIELEN" PT ELECTROTECHNIEK, ELEKTRONICA, Bd. 44, Nr. 10, 1. Oktober 1989 (1989-10-01), Seite 46, XP000070740

## Beschreibung

Die Erfindung betrifft einen Strömungswächter zur Überwachung der Strömung fließender Medien in Rohrleitungen, insbesondere zur Überwachung der Strömung und damit der Pumpenfunktion von Kühlanlagen an elektrischen Transformatoren.

Solche Strömungswächter sind in zahlreichen Ausführungsformen bekannt. So beschreibt die DE 3317923 einen solchen dort als Durchflussschalter bezeichneten, Strömungswächter, der ein in den zu überwachenden Fluidstrom ragendes Paddel aufweist. Eine das Paddel tragende Paddelstange ist schwenkbar gelagert; an ihrem freien Ende ist ein Permanentmagnet angebracht, der mit einem Reedschalter zusammenwirkt. Dieser wie auch zahlreiche andere ähnliche Strömungswächter besitzen demnach ein Paddel, das als Strömungswiderstand in die Strömung gestellt wird. Bei ausreichender Strömung wird das Paddel angeströmt und dreht sich, in der Regel gegen die Kraft einer Feder, in die Strömungsrichtung. Diese Bewegung wird in den meisten Fällen in eine Drehbewegung umgewandelt, um eine mechanische Anzeige oder auch elektrische Schaltmittel zu betätigen.

Ein weiterer Strömungswächter ähnlicher Bauart ist aus der Veröffentlichung "Technisches Datenblatt Qualitrol: Ölströmungsmelder Serie 092", Veröffentlichungsdatum März 1992, bekannt. Auch hierbei wird eine mechanische Stellkraft durch eine in die Strömung gestellte Fahne, das heißt ein Paddel, aufgebracht.

DE 2 245 882 offenbart einen Strömungswächter mit einem Paddel, das mit einer drehbaren ersten Welle verbunden ist, deren Drehbewegung über zwei Magneten berührungslos auf eine zweite Welle übertragbar ist. US 2 564 676 offenbart einen Füllstandsanzeiger mit einer drehbaren ersten Welle, deren Drehbewegung mittels magnetischer Kraftübertragung berührungslos auf eine zweite Welle übertragbar ist. Die zweite Welle ist beweglich angeordnet, so dass der Winkel zwischen erster und zweiter Welle verändert werden kann. Insbesondere können die erste Welle und die zweite Welle senkrecht zueinander angeordnet werden. Leenders, P C: Magnetische Tandwielen, PT Electrotechniek, Elektronica, Bd. 44, Nr. 10, 1. Oktober 1989, Seite 46, offenbart ein magnetisches Getriebe mit einem Antriebsteil und einem Abtriebsteil mit alternierenden Magneten. US 2 917 922 offenbart einen Strömungswächter mit einem Paddel, das mit einer drehbaren ersten Welle verbunden ist, die über ein mechanisches Getriebe mit einer zur ersten Welle senkrechten zweiten Welle verbunden ist.

Alle derzeit bekannten Strömungswächter der beschriebenen Art weisen jedoch bestimmte Nachteile auf:

Zum einen neigen sie zum Verklemmen in den Endpositionen aus unterschiedlichen Ursachen. Dies liegt oft daran, dass die Lagerung unzureichend ist, die drehbare Welle sich verkantet oder die Stellkraft konstruktiv bedingt nicht ausreichend ist. Weiterhin sind die bekannten Strömungswächter empfindlich gegenüber der häufig durch Pumpen erzeugten turbulenten Strömung, so dass die Anzeige flattert oder die notwendige Kraft zum Verstellen der Anzeige nicht ausreicht. Gelegentlich ist auch eine Nichtauslösung durch Kavitation und turbulente, nichtlaminare Strömungen festzustellen.

Aufgabe der Erfindung ist es demnach, einen Strömungswächter der eingangs genannten Art anzugeben, der einfach aufgebaut ist, leicht montierbar ist, dennoch eine hohe Funktionssicherheit aufweist, einen geringen mechanischen Widerstand besitzt und zugleich eine hohe Stellkraft für die Anzeige zur Verfügung stellt.

Diese Aufgabe wird erfindungsgemäß durch einen Strömungswächter mit den Merkmalen des ersten Patentanspruches gelöst. Die Unteransprüche betreffen besonders vorteilhafte Weiterbildungen der Erfindung.

Der erfindungsgemäße Strömungswächter ist einfach aufgebaut und besteht nur aus weniger Bauteilen; er ist robust und ermöglicht eine einfache Montage und Justierung. Bei der Erfindung wird ein "magnetisches Zahnrad" verwendet. Durch die Bewegungsumlenkung der Drehung des Paddels ohne mechanische Reibung auf eine separate Welle werden hohe Betätigungskräfte erzeugt.

Nach einer besonders vorteilhaften Weiterbildung der Erfindung weist das Paddel eine evolventenförmige Kontur auf. Damit lässt sich eine konstante Anstellkraft über den gesamten Drehwinkel erzielen.

Nach einer weiteren vorteilhaften Ausführungsform ist das Paddel mit einem rechtwinklig in Anströmrichtung aufgesetztem Versteifungssteg versehen.

Nach einer weiteren Vorteilhaften Ausführungsform ist das Paddel als halbschalenförmiger Anströmkörper, ähnlich einem Löffel, ausgestaltet, der gleichzeitig die Beeinflussung durch eine eventuelle turbulente Strömung im Rohr minimiert, da sich dadurch vor dem Paddel ein erhöhter Staudruck aufbauen kann.

Die Erfindung soll nachfolgend anhand von Zeichnungen beispielhaft noch näher erläutert werden. Es zeigen:
Figur 1 einen erfindungsgemäßen Strömungswächter in schematischer Schnittdarstellung

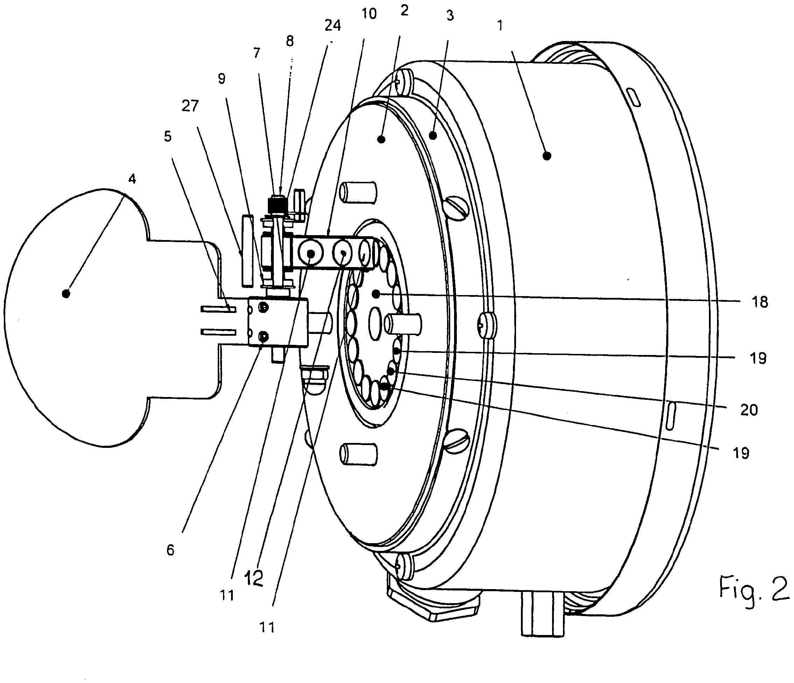

Figur 2 eine schematische Darstellung eines Strömungswächters ohne Montageplatte
Figur 3 eine Montageplatte allein in perspektivischer Darstellung von der anderen Seite
Figur 4 einen Strömungswächter gemäß der Erfindung von der anderen Seite, der Anzeigeseite, gesehen, in perspektivischer Darstellung
Figur 5 eine erste Ausführungsform eines Paddels
Figur 6 eine weitere Ausführungsform eines Paddels als halbschalenförmiger Anströmkörper
Figur 7 eine schematische Teildarstellung eines weiteren erfindungsgemäßen Strömungswächters.

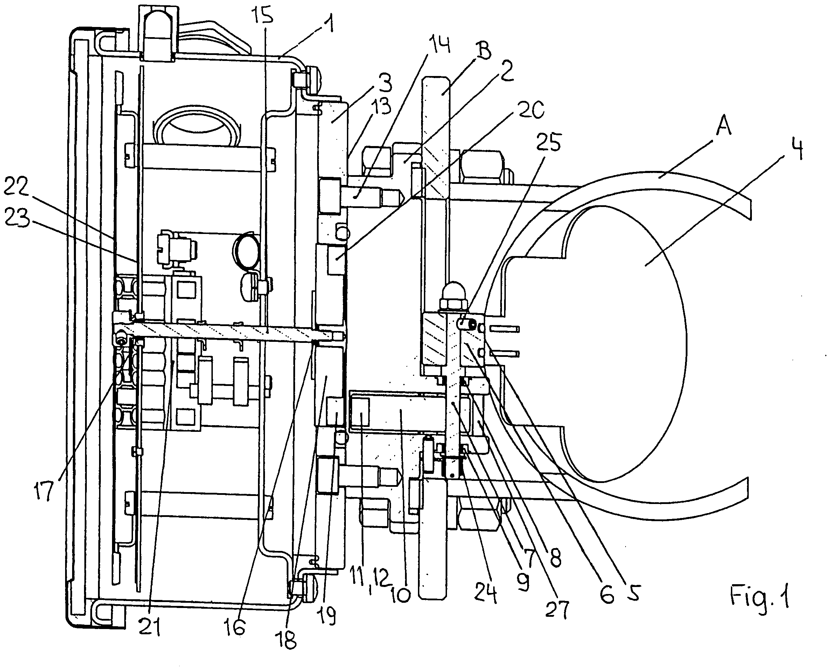

Zunächst soll die in Figur 1 gezeigte Konstruktion beschrieben werden.

Ein erfindungsgemäßer Strömungswächter, der die Strömung in einem Rohr A überwachen soll, ist an einem besonders dafür vorgesehenen Flansch B dieses Rohres A verschraubt.

Der Strömungswächter selbst besteht aus einem Gehäuse 1 und einer daran verschraubten Montageplatte 2. Dazu ist am Gehäuse 1 ein Flansch 3 vorgesehen, an dem die bereits erwähnte Montageplatte 2 verschraubt ist. An der Montageplatte 2 ist ein Paddel 4 drehbar angeordnet. Dazu besitzt das Paddel 4 einen Steg 5, an den sich eine Halterung 6 anfügt. Diese Halterung 6 und damit das Paddel 4 sind an einer drehbaren Welle 7 befestigt. Die Lagerung der Welle 7 erfolgt durch Lagerstellen 8, 9 an der Montageplatte 2. An der drehbaren Welle 7 wiederum ist ein Segment 10 mit einer kreissegmentförmigen Außenkontur befestigt. An der Stirnseite des Segmentes 10 befinden sich Magnete, und zwar alternierend N-Magnete 11 und S-Magnete 12, die in Richtung der Montageplatte 2 und damit des Flansches 3 gerichtet sind.

An dem Gehäuse 1 ist, wie bereits erläutert, die Montageplatte 2 verschraubt. Dazu weist das Gehäuse 1 den beschriebenen korrespondierenden Flansch 3 mit einer ebenen, geschlossenen Kontur 13 auf. Gezeigt sind noch die zur Verschraubung dienenden Schrauben 14. Durch das Gehäuse 1 hindurch, senkrecht zur Ebene der angeschraubten Montageplatte 2, erstreckt sich eine weitere drehbare Welle 15, die mittels Lagern 16, 17 im Gehäuse 1 gelagert ist. An ihrer im montierten Zustand dem Montageflansch 2 zugewandten Seite besitzt die Welle 15 eine Magnetscheibe 18, auf der sich ebenfalls, wiederum alternierend, Magnete, und zwar N-Magnete 19 und S-Magnete 20 befinden. Diese Magnete sind im gleichen Muster alternierend angeordnet, wie die bereits beschriebenen Magnete 11, 12 auf der Stirnseite des Segmentes 10. Sie korrespondieren miteinander und bilden damit ein berührungslos wirkendes magnetisches Getriebe, auch als "magnetisches Zahnrad" bezeichnet. An der drehbaren Welle 15 sind weiterhin elektrische Schaltmittel 21 bzw. Mittel zur Betätigung elektrischer Schalter vorgesehen. An ihrem anderen freien Ende ist an der drehbaren Welle 15 ein Zeiger 22 befestigt, der mit einer Anzeigeskala 23 korrespondiert.

Bei einer Strömung im Rohr A wird das Paddel 4 gegen die Kraft einer Feder 24, die auf die Welle 7 wirkt, ausgelenkt und dreht damit die Welle 7 und das auf ihr befestigte Segment 10 mit den an dessen Stirnseite angeordneten Magneten 11, 12. Durch die Übertragung der Magnetkräfte auf die Magnetscheibe 18, genauer deren Magnete 19, 20, die berührungslos erfolgt, wird die Welle 15 im Gehäuse 1 gedreht. In der Folge werden elektrische Schaltmittel 21 betätigt und der Zeiger 22, der die Skala 23 überstreicht, ausgelenkt.

Gezeigt ist noch ein Anschlag 27, der die maximale Auslenkung des Paddels 4 begrenzt.

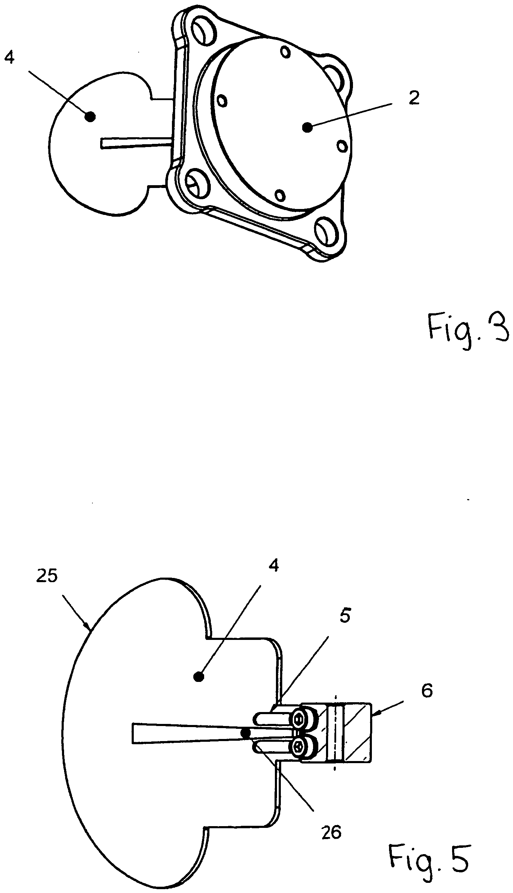

Figur 3 zeigt noch einmal in verändertem Maßstab die Montageplatte 2 allein, und zwar von der Seite gesehen, die am Flansch 3 des Gehäuses 1 verschraubt ist.

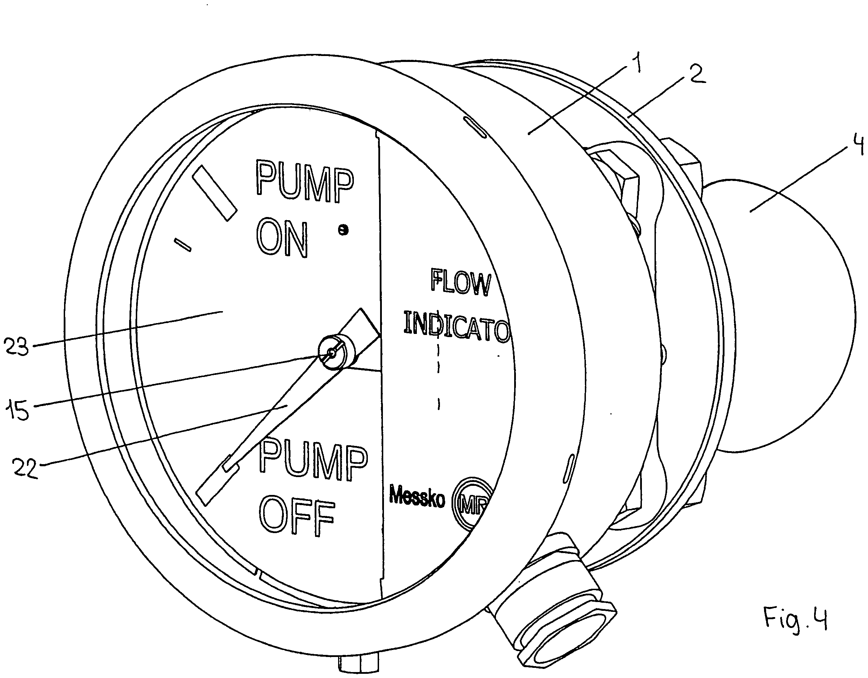

Figur 4 zeigt den kompletten Strömungswächter von der anderen Seite, an der sich Zeiger 22 und Skala 23 befinden.
Figur 5 zeigt ein Paddel 4 allein. Zu sehen ist hier eine mögliche Kontur 25 des Paddels, wodurch eine weitestgehend konstante Anströmkraft erreicht wird. Zu sehen ist weiterhin ein Anströmsteg 26, der einen hohen Widerstandsbeiwert bewirkt, der den störenden Einfluss turbulenter Strömungen im Rohr A zumindestens reduziert.

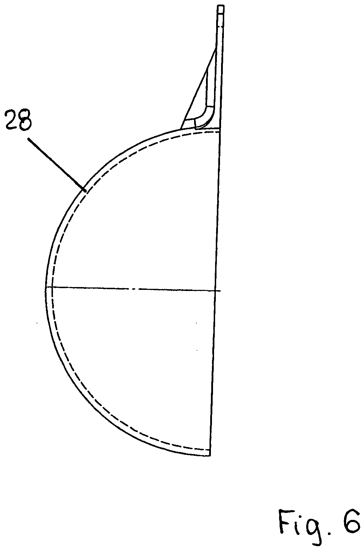

Figur 6 zeigt eine weitere, vorteilhafte Ausführungsform eines Paddels als halbschalenförmiger Anströmkörper 28. Durch eine solche Ausführung wird eine besonders hohe Anströmkraft über den gesamten Drehwinkel erreicht.

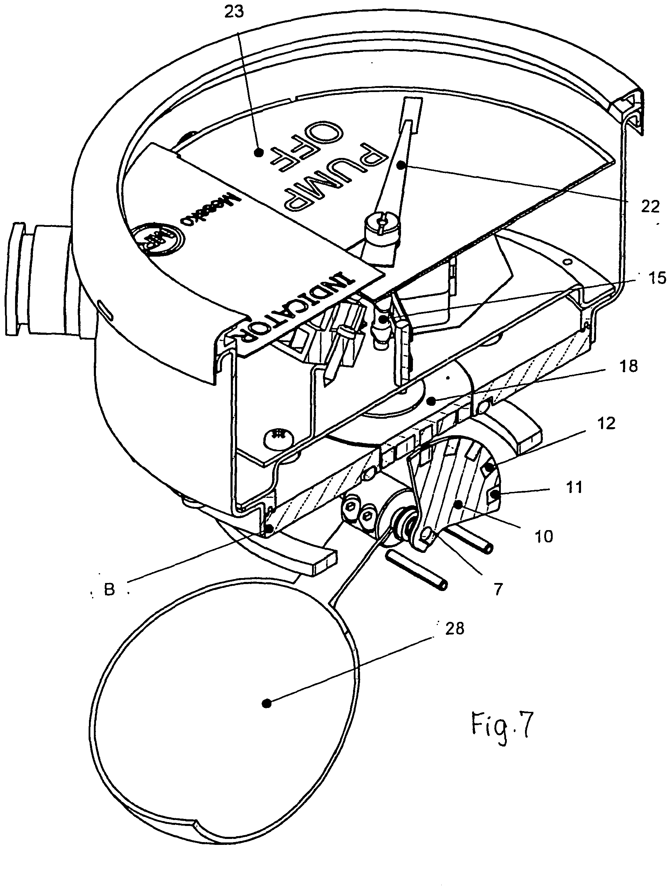

Figur 7 zeigt in schematischer Darstellung einen perspektivischen Schnitt durch einen im Rahmen der Erfindung weitergebildeten Strömungswächter. Zu sehen ist hier der eben erläuterte halbschalenförmige Anströmkörper 28, der im montierten Zustand des Ölströmungswächters, d. h. der Befestigung mittels dessen Flansch B am zu überwachenden Rohr befestigt ist. Bei einer Ölströmung in diesem Rohr wird er ausgelenkt. Der Anströmkörper 28 ist an der drehbaren Welle 7 befestigt, die ihrerseits das bereits erläuterte Segment 10 trägt, auf dem sich alternierend N-Magnete 11 und S-Magnete 12 befinden. Weiterhin zu sehen ist die Magnetscheibe 18, die auf der Welle 15 gelagert ist. In teilweiser Schnittdarstellung sind an der Magnetscheibe 18 die in gleichem Muster alternierend angeordneten Magnete gezeigt. Es ist zu sehen, dass Welle 7, die das Segment 10 trägt, und Welle 15, die Magnetscheibe 18 trägt, senkrecht zueinander angeordnet sind. Auf diese Weise korrespondieren die miteinander zusammenwirkenden Magnete in der Art eines "magnetischen Zahnrades": Bei einer vorhandenen Strömung wird der Anströmkörper 28 ausgelenkt und damit das Segment 10 gedreht. Diese Drehung überträgt sich berührungslos mittels des beschriebenen "magnetischen Zahnrades" über die Magnetscheibe 18 auf die Welle 15 und damit auf den Zeiger 22, der mit der darunterliegenden Skala 23 zusammenwirkt.

Bei der Erfindung wird eine Auslenkbewegung des Paddels 4 bzw. des gleichwirkenden Anströmkörpers 28 zunächst in eine Drehbewegung der Welle 7 und damit des Segmentes 10 umgewandelt. Erst dessen Drehung führt zu einer Drehung der weiteren, senkrecht dazu angeordneten Welle 15. In Verbindung mit der Wirkung des beschriebenen berührungslos arbeitenden "magnetischen Zahnrades" ergibt sich dann insgesamt eine Getriebeanordnung, die hohe Stellkräfte gestattet und bei der nicht die Gefahr besteht, dass ein Verklemmen in den Endpositionen erfolgt.

Aus dem Stand der Technik ist lediglich die Anordnung einer einfachen Magnetnabe bekannt, mit der eine 1:1-Übertragung der Drehbewegung von einem Paddel auf einen Anzeigezeiger erfolgt; die Erfindung gestattet hingegen ein berührungsloses echtes Getriebe mit der Möglichkeit der Veränderung des Übersetzungsverhältnisses dieser Drehbewegung, abhängig von der Dimensionierung des Segmentes 10 und der Magnetscheibe 18, in weiten Grenzen.

Der erfindungsgemäße Strömungswächter ist besonders geeignet für die Überwachung der Pumpenfunktion an Transformatoren-Kühlanlagen. Besonders vorteilhaft einsetzbar ist er bei solchen Transformatoren mit erzwungenem Öl-Kreislauf, z. B. OFAF (oil-forced air-forced) und ODAF (oildirect air-forced)-Transformatoren.

## Patentansprüche

1. Strömungswächter zur Überwachung der Strömung fließender Medien in einer Rohrleitung, wobei der Strömungswächter ein Paddel aufweist, das im montierten Zustand des Strömungswächters an der Rohrleitung in die lichte Weite der Rohrleitung hineinragt und deren Querschnitt in Ruhelage mindestens teilweise ausfüllt,
wobei das Paddel gegen die Kraft einer Feder aus der Ruhelage auslenkbar und in die Strömungsrichtung drehbar ist,
wobei das Paddel mit einer drehbaren ersten Welle verbunden ist, deren Drehbewegung berührungslos auf eine zweite Welle übertragbar ist
und wobei die zweite Welle einen Zeiger trägt,
**dadurch gekennzeichnet,**
**dass** erste Welle (7) und zweite Welle (15) senkrecht zueinander gelagert sind,
**dass** zwischen erster und zweiter Welle (7, 15) ein magnetisches Getriebe mit einem Antriebsteil auf der ersten Welle (7) und einem Abtriebsteil auf der zweiten Welle (15) angeordnet ist,
**dass** das magnetische Getriebe aus einem Segment (10) als Antriebsteil auf der ersten Welle (7) und einer Magnetscheibe (18) als Abtriebsteil auf der zweiten Welle (15) besteht,
wobei auf der Stirnseite des Segments (10) alternierend N-Magnete (11) und S-Magnete (12) angeordnet sind
und wobei am seitlichen Umfang der Magnetscheibe (18) auf einem Teilkreis ebenfalls alternierend weitere N-Magnete (19) und S-Magnete (20) angeordnet sind, derart, dass die Teilung der Magnete auf der Magnetscheibe (18) mit denen auf dem Segment (10) korrespondiert.

2. Strömungswächter nach Anspruch 1,
**dadurch gekennzeichnet,**
**dass** das Paddel als halbschalenförmiger Anströmkörper (28) mit einer dreidimensionalen Struktur ausgebildet ist.

3. Strömungswächter nach Anspruch 2,
**dadurch gekennzeichnet,**
**dass** das Paddel (4) eine Kontur (25) in Form einer Evolvente aufweist.

## Claims

1. Flow monitor for monitoring the flow of flowing media in a pipe duct, wherein the flow monitor comprises a paddle which in the mounted state of the flow monitor at the pipe duct protrudes into the clear width of the pipe duct and in rest position at least partly fills the cross-section thereof, wherein the paddle is deflectable out of the rest position against the force of the spring and is rotatable in the flow direction, wherein the paddle is connected with a rotatable first shaft, the rotational movement of which is contactlessly transmissible to a second shaft, and wherein the second shaft carries a pointer, **characterised in that** the first shaft (7) and the second shaft (15) are mounted perpendicularly relative to one another, that a magnetic transmission with a drive part on the first shaft (7) and a driven part on the second shaft (15) is arranged between the first and second shafts (7, 15), that the magnetic transmission consists of a segment (10) as drive part on the first shaft (7) and a magnet disc (18) as driven part on the second shaft (15), wherein north-pole magnets (11) and south-pole magnets (12) are arranged in alternation on the end face of the segment (10) and wherein further north-pole magnets (19) and south-pole magnets (20) are similarly arranged in alternation on an arc at the lateral circumference of the magnetic disc (18) in such a manner that the pitch of the magnets on the magnet disc (18) corresponds with that on the segment (10).

2. Flow monitor according to claim 1, **characterised in that** the paddle is formed as an incident flow body (28) of half-shell shape with a three-dimensional structure.

3. Flow monitor according to claim 2, **characterised in that** the paddle (4) has a profile (25) in the form of an involute.

## Revendications

1. Contrôleur d'écoulement pour surveiller l'écoulement d'un fluide en mouvement dans une conduite,
* le contrôleur d'écoulement ayant une palette qui, lorsque le contrôleur d'écoulement est installé sur la conduite, pénètre dans la section libre de la conduite et occupe au moins en partie la section de la conduite lorsqu'elle est en position de repos,
* la palette est déviée de sa position de repos contre la force développée par un ressort et elle pivote dans le sens de l'écoulement,
* la palette est reliée à un premier arbre rotatif dont le mouvement de rotation est transmis à un second arbre par une transmission sans contact, et
* le second arbre porte une aiguille indicatrice,
contrôleur **caractérisé en ce que**
- le premier arbre (7) et le second arbre (15) sont perpendiculaires,
- une transmission magnétique est prévue entre le premier et le second arbre (7, 15), avec une partie motrice sur le premier arbre (7) et une partie entraînée sur le second arbre (15),
- la transmission magnétique se compose d'un segment (10) comme partie motrice sur le premier arbre (7) et par un disque magnétique (18) comme partie entraînée sur le second arbre (15),
* des aimants de polarité N (11) et des aimants de polarité S (12) sont installés en alternance sur la face du segment (10), et
* la périphérie latérale du disque magnétique (18) porte également sur une partie de cercle, une alternance d'autres aimants N (19) et d'aimants S (20) installés pour que le pas des aimants sur le disque magnétique (18) corresponde à celui des aimants sur le segment (10).

2. Contrôleur d'écoulement selon la revendication 1,
**caractérisé en ce que**
la palette est un organe (28) exposé à l'écoulement, en forme de demi-coquille à structure tridimensionnelle.

3. Contrôleur d'écoulement selon la revendication 2,
**caractérisé en ce que**
la palette (4) a un contour (25) en forme de développante.
